(19) Europäisches Patentamt
European Patent Office
Office européen des brevets

(11) Veröffentlichungsnummer: **0 259 255 B1**

# (12) EUROPÄISCHE PATENTSCHRIFT

(45) Veröffentlichungstag der Patentschrift: **14.08.91**

(51) Int. Cl.5: **C09D 5/08**, C09D 7/12, C23F 11/16

(21) Anmeldenummer: **87810469.4**

(22) Anmeldetag: **21.08.87**

## (54) Phenolische Korrosionsinhibitoren für Anstrichstoffe.

(30) Priorität: **27.08.86 CH 3438/86**

(43) Veröffentlichungstag der Anmeldung:
**09.03.88 Patentblatt 88/10**

(45) Bekanntmachung des Hinweises auf die Patenterteilung:
**14.08.91 Patentblatt 91/33**

(84) Benannte Vertragsstaaten:
**AT BE DE ES FR GB IT NL SE**

(56) Entgegenhaltungen:
**EP-A- 0 128 862**
**US-A- 4 568 753**

(73) Patentinhaber: **CIBA-GEIGY AG**
**Klybeckstrasse 141**
**CH-4002 Basel(CH)**

(72) Erfinder: **Braig, Adalbert, Dr.**
**Zollstrasse 1/1**
**W-7858 Weil-Friedlingen(DE)**

EP 0 259 255 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung betrifft Anstrichstoffe, die als Korrosionsinhibitoren phenolische Derivate des Mercaptobenzthiazols enthalten.

Mercaptobenzthiazol und seine Salze sind als Korrosionsinhibitoren bekannt, z.B. aus der EP-A-3817. Es wurden auch bereits verschiedene Derivate des Mercaptobenzthiazols als Korrosionsinhibitoren vorgeschlagen, z.B. die in der EP-A-129.506 beschriebenen Benzthiazol-2-ylthiocarbonsäuren und deren Salze. Hierbei handelt es sich vorwiegend um Derivate mit hydrophilen Gruppen.

Es wurde nunmehr gefunden, dass auch bestimmte Benzthiazolderivate mit hydrophoben Gruppen ausgezeichnete Korrosionsinhibitoren sein können. Diese sind ausserdem auch als Antioxidantien und als Lichtschutzmittel wirksam.

Die Verbindungen zeichnen sich gegenüber bekannten Korrosionsinhibitoren auf Basis von Benzthiazolderivaten durch geringere Wasseraufnahme, durch chemische Inertheit und durch ihre thermostabilisierende Wirkung aus.

Diese Verbindungen können als Korrosionsinhibitoren in allen solchen organischen Materialien verwendet werden, die mit Metallen in Kontakt stehen. Dies ist insbesondere bei Anstrichstoffen der Fall.

Die Erfindung betrifft daher Anstrichstoffe enthaltend als Korrosionsinhibitor mindestens eine Verbindung der Formel I,

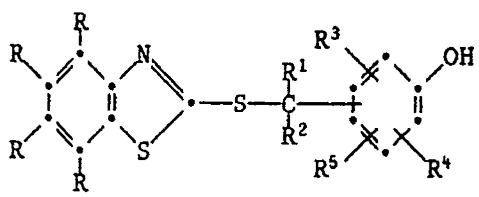

I

worin jedes R unabhängig voneinander Wasserstoff, $C_1$-$C_{12}$-Alkyl, $C_1$-$C_4$-Halogenalkyl, $C_1$-$C_{12}$-Alkoxy, $C_1$-$C_{12}$-Alkylthio, Phenylthio, Benzylthio, $C_1$-$C_{12}$-Alkylsulfonyl, Phenyl, $C_7$-$C_{15}$-Alkylphenyl, $C_7$-$C_{10}$-Phenylalkyl, $C_5$-$C_8$-Cycloalkyl, Halogen, $-NO_2$, -CN, -COOH, -COO($C_1$-$C_4$-Alkyl), -OH, $-NH_2$, $-NHR^6$, $-N(R^6)_2$, $-CONH_2$, $-CONHR^6$ oder $-CON(R^6)_2$ bedeutet,

$R^1$ Wasserstoff, $C_1$-$C_{12}$-Alkyl, Phenyl, durch Halogen, $C_1$-$C_4$-Alkyl, $C_1$-$C_4$-Alkoxy oder $-NO_2$ substituiertes Phenyl, Pyridyl, Thienyl oder Furyl bedeutet,

$R^2$ Wasserstoff oder $C_1$-$C_4$-Alkyl bedeutet,

$R^3$ und $R^4$ unabhängig voneinander Wasserstoff, Halogen, $C_1$-$C_4$-Alkoxy, Cyano, Nitro, $C_1$-$C_{20}$-Alkyl, $-(CH_2)_m-COOR^7$ , $-(CH_2)_m-CONHR^6$ , $-(CH_2)_m-CON(R^6)_2$, $C_3$-$C_{20}$-Alkenyl, $C_7$-$C_{10}$-Phenylalkyl, Phenyl, Cyclohexyl, Cyclopentyl oder eine Gruppe der Formel II

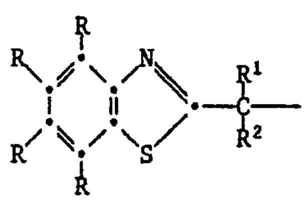

II

bedeutet,

$R^5$ Wasserstoff, $C_1$-$C_{20}$-Alkyl, $C_3$-$C_{20}$-Alkenyl oder Hydroxyl bedeutet, oder $R^3$ und $R^5$ zusammen oder $R^4$ und $R^5$ zusammen einen Ring bilden, der an den Phenolrest anelliert ist und der ein carbocyclisher oder heterocyclischer Ring sein kann und als Heteroatome Sauerstoff, Stickstoff oder Schwefel enthalten kann,

$R^6$ $C_1$-$C_{12}$-Alkyl, durch ein oder mehrere O-Atome unterbrochenes $C_3$-$C_{12}$-Alkyl, $C_5$-$C_8$-Cycloalkyl, Benzyl, Phenyl oder durch Halogen, $C_1$-$C_4$-Alkyl, $C_1$-$C_4$-Alkoxy oder Nitro substituiertes Phenyl bedeutet oder $-N(R^6)_2$ eine Pyrrolidino-, Piperidino- oder Morpholinogruppe bedeutet,

$R^7$ $C_1$-$C_{20}$-Alkyl bedeutet, das durch Halogen oder Hydroxyl substituiert sein kann, oder $C_3$-$C_{20}$-Alkyl bedeutet, das durch ein oder mehrere Sauerstoffatome unterbrochen ist und auch durch Hydroxyl substituiert sein kann, und m 0, 1 oder 2 ist.

In Formel I können R, $R^1$, $R^2$, $R^3$, $R^4$, $R^5$, $R^6$ oder $R^7$ als Alkyl unverzweigtes oder verzweigtes Alkyl sein. Soweit dies $C_1$-$C_4$-Alkyl ist, können dies z.B. Methyl, Ethyl, n-Propyl, Isopropyl, n-Butyl, sec.Butyl, Isobutyl oder tert.Butyl sein. R, $R^1$, $R^3$, $R^4$, $R^5$, $R^6$ und $R^7$ können auch $C_5$-$C_{12}$-Alkyl sein, wie z.B. Pentyl, Hexyl, n-Octyl, 2-Ethylhexyl, 1,1,3,3-Tetramethylbutyl, 1,1,3,3,5,5-Hexamethylhexyl, n-Decyl, Isodecyl oder n-Dodecyl. $R^3$, $R^4$, $R^5$ und $R^7$ können auch $C_{13}$-$C_{20}$-Alkyl sein, wie z.B. Tridecyl, Tetradecyl, Pentadecyl, Hexadecyl, Octadecyl oder Eikosyl.

R als Halogenalkyl kann z.B. Chlormethyl, Trichlormethyl, Brommethyl, 2-Chlorethyl, 2,2,2-Trichlorethyl, Trifluormethyl oder 2,3-Dichlorpropyl sein.

R als Alkoxy, Alkylthio oder Alkylsulfonyl kann z.B. Methoxy, Ethoxy, Isopropoxy, Butoxy, Hexyloxy, Octyloxy, Dodecyloxy, Methylthio, tert.Butylthio, Dodecylthio, Methylsulfonyl, Ethylsulfonyl, Hexylsulfonyl oder Dodecylsulfonyl sein. R als Alkylphenyl kann z.B. Tolyl, Xylyl, 4-Ethylphenyl, 4-tert.Butylphenyl, 4-Octylphenyl oder 4-Nonylphenyl sein.

R, $R^3$ und $R^4$ als Phenylalkyl können z.B. Benzyl, 1-Phenylethyl, 2-Phenylethyl, $\alpha,\alpha$-Dimethylbenzyl oder 2-Phenylpropyl sein.

R und $R^6$ als Cycloalkyl können z.B. Cyclopentyl, Cyclohexyl, Cycloheptyl, Methylcyclohexyl oder Cyclooctyl sein.

$R^1$ und $R^6$ als durch Halogen, $C_1$-$C_4$-Alkyl, $C_1$-$C_4$-Alkoxy oder Nitro substituiertes Phenyl können z.B. 4-Chlorphenyl, 3-Bromphenyl, 2-Fluorphenyl, p-Tolyl, 3,5-Dimethylphenyl, 4-Isopropylphenyl, 4-Methoxyphenyl, 3-Ethoxyphenyl, 4-Nitrophenyl oder 4-Nitro-2-methylphenyl sein.

$R^6$ und $R^7$ als durch O unterbrochenes Alkyl kann z.B. 2-Methoxyethyl, 2-Butoxyethyl, 3,6-Dioxaheptyl oder 3,6-Dioxadecyl sein. $R^7$ kann auch ein Polyethylenglykolrest mit bis zu 20 C-Atomen und bis zu 10 O-Atom sein.

Wenn $R^3$ und $R^5$ zusammen oder $R^4$ und $R^5$ zusammen einen annellierten Ring bilden so ist dies vorzugsweise ein Benzol-, Pyridin- oder Benzofuranring. Zusammen mit dem Phenolring ergibt sich dann ein Naphthol-, Hydroxychinolin- oder Dibenzofuranrest.

Bevorzugt sind Anstrichstoffe enthaltend eine Verbindung der Formel I, worin ein R Wasserstoff, $C_1$-$C_4$-Alkyl, $C_1$-$C_4$-Alkoxy, Halogen, Trifluormethyl oder Nitro bedeutet und die anderen drei R Wasserstoff sind.

Bevorzugt sind weiterhin Anstrichstoffe enthaltend eine Verbindung der Formel I, worin $R^1$ Wasserstoff, $C_1$-$C_8$-Alkyl, Phenyl oder Furyl bedeutet und $R^2$ Wasserstoff ist, insbesondere eine Verbindung der Formel I, worin $R^1$ und $R^2$ Wasserstoff sind.

Bevorzugt sind weiterhin Anstrichstoffe enthaltend eine Verbindung der Formel I, worin $R^3$ und $R^4$ unabhängig voneinander Wasserstoff, $C_1$-$C_8$-Alkyl, Allyl, $C_7$-$C_{10}$-Phenylalkyl, $C_1$-$C_4$-Alkoxy, Halogen, Phenyl oder Cyclohexyl bedeuten, und $R^5$ Wasserstoff, $C_1$-$C_{18}$-Alkyl oder $C_3$-$C_{18}$-Alkenyl ist.

In Formel I steht die phenolische OH-Gruppe bevorzugt in Para- oder Orthoposition zur Gruppe >C($R^1$)-($R^2$). Wenn sie in Paraposition steht, so sind Verbindungen der Formel III bevorzugt,

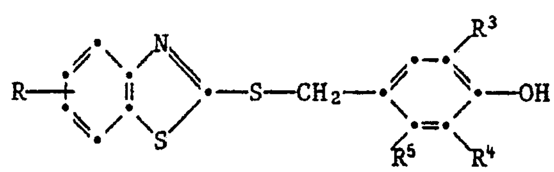

III

worin R Wasserstoff, $C_1$-$C_4$-Alkyl, $C_1$-$C_4$-Alkoxy, Chlor, Trifluormethyl oder Nitro ist,
$R^3$ und $R^4$ unabhängig voneinander Wasserstoff, $C_1$-$C_8$-Alkyl, $C_7$-$C_{10}$-Phenylalkyl, Phenyl oder Cyclohexyl sind, und $R^5$ H oder $CH_3$ ist.

Wenn in Formel I die phenolische OH-Gruppe in Orthostellung steht, so sind Verbindungen der Formel IV und IVa bevorzugt,

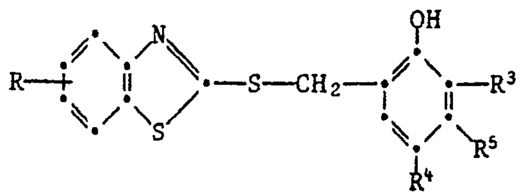

IV

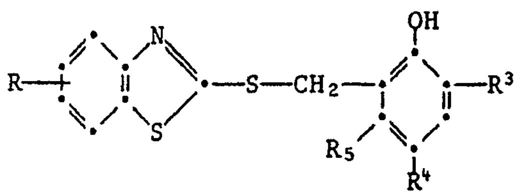

IVa

worin R Wasserstoffe, $C_1$-$C_4$-Alkyl, $C_1$-$C_4$-Alkoxy, Chlor, Trifluormethyl oder Nitro ist, $R^3$ und $R^4$ unabhängig voneinander Wasserstoff, $C_1$-$C_8$-Alkyl, $C_7$-$C_{10}$-Phenylalkyl, Phenyl, Cyclohexyl oder eine Gruppe der Formel IIa sind

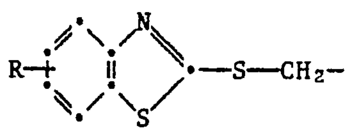

IIa

und $R^5$ Wasserstoff, $C_1$-$C_{18}$-Alkyl oder $C_3$-$C_{18}$-Alkenyl bedeutet.

Beispiele für einzelne Verbindungen der Formel III sind solche mit den im folgenden angegebenen Substituenten:

| Verbindung Nr. | R | $R^3$ | $R^4$ | $R^5$ |
|---|---|---|---|---|
| 1 | H | Methyl | t-Butyl | H |
| 2 | H | t-Butyl | t-Butyl | H |
| 3 | H | t-Butyl | Methyl | Methyl |
| 4 | H | Methyl | Cyclohexyl | H |
| 5 | 5-$OC_2H_5$ | t-Butyl | t-Butyl | H |
| 6 | H | Cyclohexyl | Cyclohexyl | H |
| 7 | H | t-Butyl | Cyclohexyl | H |
| 8 | H | Phenyl | Phenyl | H |
| 9 | 5-Cl | 1,1,3,3-Tetramethylbutyl | Methyl | H |
| 10 | H | α,α-Dimethylbenzyl | α,α-Dimethylbenzyl | H |
| 11 | H | 1,1,3,3-Tetramethylbutyl | Methyl | Methyl |
| 12 | 6-Cl | 1,1-Dimethylpropyl | 1,1-Dimethylpropyl | H |
| 13 | 6-Cl | t-Butyl | t-Butyl | H |
| 14 | 6-$CF_3$ | t-Butyl | t-Butyl | H |
| 15 | 6-$NO_2$ | t-Butyl | Cyclohexyl | H |
| 16 | H | H | Methyl | Methyl |
| 17 | H | Methyl | H | H |
| 18 | 6-$CH_3$ | H | H | Methyl |

Beispiele für einzelne Verbindungen der Formel IV sind solche mit den im folgenden angegebenen Substituenten:

| Verbindung Nr. | R | $R^3$ | $R^4$ | $R^5$ |
|---|---|---|---|---|
| 20 | H | t-Butyl | Methyl | H |
| 21 | H | t-Butyl | t-Butyl | H |
| 22 | H | $-CH_2S-$ 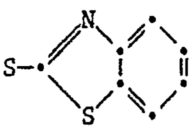 | Methyl | H |
| 23 | H | 2-Methylpropyl (Isobutyl) | 1,1-Dimethylpropyl (t-Amyl) | H |
| 24 | H | 1,1-Dimethylpropyl | 1,1-Dimethylpropyl | H |
| 25 | H | 1,1,3,3-Tetramethylbutyl (t-Octyl) | 1,1,3,3-Tetramethylbutyl | H |
| 26 | H | Isopropyl | Isopropyl | H |
| 27 | H | Methyl | Methyl | H |
| 28 | $5-NO_2$ | α,α-Dimethylbenzyl | Methyl | H |
| 29 | H | H | α,α-Dimethylbenzyl | H |
| 30 | H | H | Nonyl | H |
| 31 | H | H | Isopropyl | H |
| 32 | H | H | H | t-Butyl |
| 33 | H | H | H | Pentadecyl |
| 34 | H | H | H | Pentadecenyl |
| 35 | $4-CH_3$ | Cyclohexyl | Cyclohexyl | H |
| 36 | $5-CH_3O$ | H | Methyl | Methyl |

Beispiele für Verbindungen der Formel IVa sind solche mit dem im folgenden angegebenen Substituenten:

| Verbindung Nr. | R | $R^3$ | $R^4$ | $R^5$ |
|---|---|---|---|---|
| 37 | H | Isopropyl | H | Methyl |
| 38 | H | Methyl | Methyl | Methyl |
| 39 | 6-Cl | H | Methyl | Methyl |

Ein Teil der Verbindungen der Formel I sind bekannte Verbindungen. So beschreibt die US-A-3,215,641 Verbindungen der Formel III als Antioxidantien für organische Materialien, wie z.B. Kautschuk oder Schmieröle. Ihre Herstellung erfolgt aus 2-Mercaptobenzthiazol und einem 4-Hydroxymethyl-2,6-dialkylphenol in Gegenwart saurer Katalysatoren. In der SU-A-681,075 wird die Verbindung

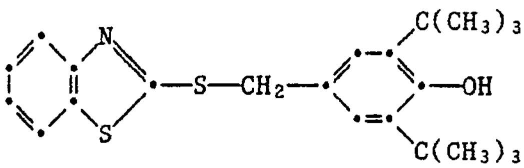

als Vulkanisationsbeschleuniger für synthetische Kautschuke vorgeschlagen.

Die US-A-3,219,701 beschreibt die Herstellung von Verbindungen der Formel IV aus 2-Mercaptobenzthiazol, Formaldehyd und einem 2,4-Di-alkylphenol. Diese Produkte werden als Zwischenprodukte zur Herstellung von anderen Antioxidantien verwendet. Auch in den US-A-3,281,473 und 3,291,841 werden solche Verbindungen der Formel IV als Zwischenprodukte für die Herstellung von Antioxidantien verwendet. In der US-A-3,310,524 werden Verbindungen der Formel IV selbst als Antioxidantien für Kautschuke, Polymere und Mineralöle vorgeschlagen.

Nach diesen beiden bekannten Herstellungsmethoden können auch die neuen Verbindungen der Formel I hergestellt werden. Als vielseitig anwendbare Methode hat sich insbesondere die Kondensation eines 2-Mercaptobenzthiazoles mit einer Carbonylverbindung und einem Phenol erwiesen nach dem allgemeinen Reaktionsschema:

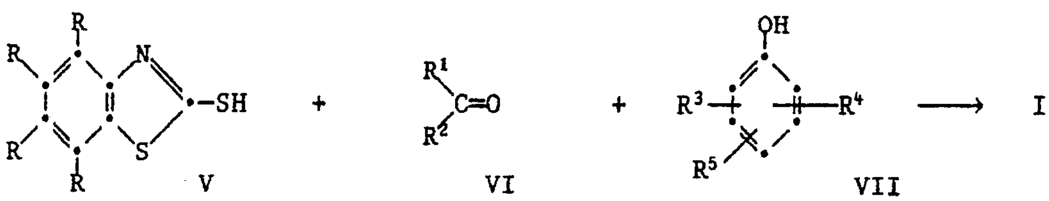

Verwendet man ein 2,6-disubstituiertes Phenol, so tritt der Benzthiazolthioalkylrest in die 4-Stellung. Verwendet man ein 2,4-disubstituiertes Phenol, so tritt dieser Rest in die 2-Stellung des Phenoles. Verwendet man ein 2-substituiertes Phenol, so kann man bei Verwendung von mindestens 2 Aequivalenten V und mindestens 2 Aequivalenten VI ein Produkt erhalten, in dem sich sowohl in 4-Stellung wie in 6-Stellung ein Rest der Formel II befindet.

Die Reaktion wird in Gegenwart saurer Katalysatoren ausgeführt. Vorzugsweise arbeitet man in einem polaren Lösungsmittel, wie z.B. einem niederen Alkohol ($C_1$-$C_4$) oder in Dimethylformamid oder in Dimethylsulfoxid.

Die Verbindungen der Formel I sind wirksame Korrosionsinhibitoren in organischen Materialien, insbesondere in Anstrichstoffen. Anstrichstoffe sind z.B. Lacke, Farben oder Firnisse. Sie enthalten stets ein filmbildendes Bindemittel neben anderen fakultativen Komponenten.

Beispiele für Anstrichstoffe sind solche auf Basis eines Alkyd-, Acryl-, Melamin-, Polyurethan, Epoxid- oder Polyesterharzes sowie von Gemischen solcher Harze. Weitere Beispiele für Bindemittel sind Vinylharze wie z.B. Polyvinylacetat, Polyvinylbutyral, Polyvinylchlorid und deren Copolymere, Celluloseester, chlorierte Kautschuke, Phenolharze, Styrol-Butadien-Copolymere und trocknende Oele. Besonders bevorzugt sind Anstrichstoffe auf Basis eines aromatischen Epoxidharzes.

Die Anstrichstoffe können lösungsmittelhaltig oder lösungsmittelfrei sein oder sie können wässrige Systeme (Dispersionen, Emulsionen, Lösungen) darstellen. Sie können pigmentiert oder unpigmentiert sein, sie können auch metallisiert sein. Ausser den erfindungsgemässen Korrosionsinhibitoren können sie sonstige in der Technologie der Anstrichstoffe übliche Zusätze enthalten, wie z.B. Füllstoffe, Verlaufhilfsmittel, Dispergierhilfsmittel, Thixotropiemittel, Haftverbesserer, Antioxidantien, Lichtschutzmittel oder Härtungskatalysatoren. Sie können auch andere bekannte Korrosionsschutzmittel enthalten, beispielsweise Korrosionsschutz-Pigmente, wie phosphat- oder borathaltige Pigmente oder Metalloxid-Pigmente, oder andere organische oder anorganische Korrosionsinhibitoren, z.B. Salze der Nitroisophthalsäure, Phosphorester, technische Amine oder substituierte Benztriazole.

Von Vorteil ist ferner der Zusatz von basischen Füllstoffen oder Pigmenten, die in bestimmten Bindemittelsystemen einen synergistischen Effekt auf die Korrosionsinhibierung bewirken. Beispiele für solche basische Füllstoffe und Pigmente sind Calcium- oder Magnesiumcarbonat, Zinkoxid, Zinkcarbonat, Zinkphosphat, Magnesiumoxid, Aluminiumoxid, Aluminiumphosphat oder Gemische davon. Beispiele für

basische organische Pigmente sind solche auf Basis von Aminoanthrachinon.

Der Korrosionsinhibitor kann auch auf einem Trägerstoff aufgebracht werden. Hierfür eignen sich insbesondere pulverförmige Füllstoffe oder Pigmente. Diese Technik ist in der DE-A-3 122 907 näher beschrieben.

Der Korrosionsinhibitor kann dem Anstrichstoff während dessen Herstellung zugesetzt werden, z.B. während der Pigmentverteilung durch Mahlen, oder man löst den Inhibitor in einem Lösungsmittel vor und rührt die Lösung in das Ueberzugsmittel ein. Man verwendet den Inhibitor zweckmässig in einer Menge von 0,1 bis 20 Gew.%, vorzugsweise 0,5 bis 5 Gew.% bezogen auf den Feststoffgehalt des Anstrichstoffes.

Bevorzugt werden die Anstrichstoffe als Primer für metallische Substrate, wie z.B. für Eisen, Stahl, Kupfer, Zink oder Aluminium, verwendet. Bevorzugt werden die Anstrichstoffe in wässrigen Systemen verwendet, insbesondere als kathodisch abscheidbare Elektrophoreselacke.

Die Anstrichstoffe können nach den üblichen Verfahren auf das Substrat aufgebracht werden, z.B. durch Sprühen, Tauchen, Streichen oder durch Elektroabscheidung, wie z.B. durch kathodische Tauchlackierung. Oft werden mehrere Schichten aufgetragen. Die Korrosionsinhibitoren werden in erster Linie der Grundschicht zugegeben, da sie vor allem an der Grenze Metall-Anstrich wirken. Man kann aber die Inhibitoren auch zusätzlich der Deckschicht oder Zwischenschicht zugeben, wo sie als Depot zur Verfügung stehen. Je nachdem, ob das Bindemittel ein physikalisch trocknendes oder hitze- oder strahlenhärtbares Harz ist, erfolgt die Härtung bei Raumtemperatur oder durch Erwärmen (Einbrennen) oder durch Bestrahlung.

Beim Erwärmen des Anstrichstoffes kann eine Isomerisierung der Verbindungen der Formel I in die entsprechenden 3-Hydroxybenzylbenzthiazol-2-thione eintreten. Da diese Isomeren ebenfalls gute Korrosionsinhibitoren sind, wird die Wirksamkeit der Verbindugnen durch eine solche Isomerisierung nicht beeinträchtigt.

Es ist ein besonderer Vorteil der Verbindungen der Formel I, dass sie die Adhäsion Anstrich-Metall günstig beeinflussen. Sie besitzen ausserdem eine antioxidative und lichtstabilisierende Wirkung auf den Anstrich.

In bestimmten Fällen kann der Zusatz eines Gemisches von mehreren Verbindungen der Formel I vorteilhaft sein.

Beispielsweise kann bei Einsatz bestimmter technischer Phenolgemische bei der Herstellung der Verbindungen der Formel I zwangsläufig ein Gemisch von Produkten der Formel I entstehen, das als solches verwendet werden kann. Es kann aber auch zur Herabsetzung des Schmelzpunktes von Vorteil sein, zwei oder mehr solcher Verbindungen zu mischen.

Beispiel

Ein Alkydharz-Lack wird aus folgenden Komponenten bereitet:

40 Teile Alphthalat® AM 380 (60%ige Xylol-Lösung) Alkydharz der Fa. Reichhold Albert Chemie AG
10 Teile Eisenoxidrot 225 der Fa. Bayer AG
13,6 Teile Talkum (mikronisiert)
13 Teile mikronisiertes Calciumcarbonat (Millicarb®, Plüss-Staufer AG)

0,3 Teile Hautverhütungsmittel Luaktin® (BASF)
0,6 Teile 8%ige Cobaltnaphthenat-Lösung
22,5 Teile Xylol/Ethylglykol-Gemisch 6:40.

Der Lack wird mit Glasperlen gemahlen bis zu einer Pigment- und Füllstoffkorngrösse von 10-15 µm. Vor dem Mahlen werden die in den folgenden Tabellen angegebenen Korrosionsinhibitoren zugegeben.

Der Lack wird auf sandgestrahlte Stahlbleche von 7 x 13 cm aufgespritzt in einer Schichtdicke, die nach dem Trocknen ca. 50 µm beträgt. Nach 7 Tagen Trocknung bei Raumtemperatur werden die Proben 60

Min. bei 60° nachgehärtet.

In die gehärtete Lackoberfläche werden zwei kreuzförmige Schnitte von 4 cm Länge bis zum Metall eingeschnitten mit Hilfe eines Bonder-Kreuzschnittgerätes. Zum Schutze der Kanten wird auf diese ein Kantenschutzmittel (Icosit® 255) aufgebracht.

Die Proben werden nunmehr einem Salzsprühtest gemäss ASTM B 117 mit einer Dauer von 600 Stunden unterworfen. Nach jeweils 200 Stunden Bewitterung wird der Zustand des Anstriches beurteilt, und zwar der Blasengrad (gemäss DIN 53 209) am Kreuzschnitt und auf der lackierten Fläche sowie der Rostgrad (gemäss DIN 53 210) auf der ganzen Fläche.

Nach Ende des Tests wird der Anstrich durch Behandlung mit konzentrierter Natronlauge entfernt und die Korrosion des Metalls am Kreuzschnitt (gemäss DIN 53 167) sowie über die restliche Fläche beurteilt. Die Beurteilung erfolgt jeweils in einer 6-Stufen-Skala. Die Summe der Bewertung des Anstriches und der Bewertung der Metalloberfläche ergibt den Korrosionsschutzwert KS. Je höher dieser ist, desto wirkungsvoller ist der getestete Inhibitor.

Tabelle 1:

| Korrosions-inhibitor | Zusatz-menge* | Beurteilung Anstrich | Beurteilung Metall | KS |
|---|---|---|---|---|
| Keiner | - | 1,6 | 0,6 | 2,2 |
| Verbindung Nr. 1 | 2 % | 2,9 | 3,6 | 6,2 |
| Verbindung Nr. 2 | 2 % | 1,9 | 1,7 | 3,6 |
| Verbindung Nr. 4 | 2 % | 3,9 | 3,9 | 7,8 |
| | 4 % | 4,2 | 5,4 | 9,6 |
| Verbindung Nr. 5 | 2 % | 2,9 | 2,9 | 5,1 |
| Verbindung Nr. 6 | 2 % | 2,3 | 1,4 | 3,7 |
| Verbindung Nr. 7 | 2 % | 4,4 | 4,5 | 8,9 |
| Verbindung Nr. 13 | 2 % | 4,8 | 1,3 | 6,1 |
| Verbindung Nr. 14 | 2 % | 3,6 | 2,4 | 6,0 |
| Verbindung Nr. 20 | 2 % | 4,0 | 3,9 | 7,9 |
| | 4 % | 5,2 | 3,5 | 8,7 |
| Verbindung Nr. 22 | 2 % | 3,8 | 1,7 | 5,5 |
| Verbindung Nr. 23 | 2 % | 3,5 | 2,8 | 6,3 |
| Verbindung Nr. 24 | 2 % | 2,8 | 2,1 | 4,9 |
| Verbindung Nr. 25 | 2 % | 2,1 | 1,7 | 3,8 |
| Verbindung Nr. 26 | 2 % | 3,1 | 2,2 | 5,3 |
| Verbindung Nr. 27 | 2 % | 2,8 | 1,2 | 4,0 |
| Verbindung Nr. 29 | 2 % | 3,6 | 5,0 | 8,6 |
| Verbindung Nr. 30 | 2 % | 3,0 | 1,6 | 4,6 |
| Verbindung Nr. 31 | 2 % | 4,3 | 4,5 | 8,8 |
| Verbindung Nr. 32 | 2 % | 4,5 | 4,5 | 9,0 |
| Verbindung Nr. 33 | 2 % | 3,6 | 4,8 | 8,4 |
| Verbindung Nr. 34 | 2 % | 4,8 | 4,9 | 9,7 |
| Verbindung Nr. 37 | 2 % | 3,8 | 5,5 | 9,3 |
| Verbindung Nr. 38 | 2 % | 3,7 | 3,7 | 7,5 |
| | 4 % | 5,1 | 4,4 | 9,5 |

*) bezogen auf den Festkörpergehalt des Lackes

Beispiel 2: Es werden Eisenbleche mit einem roten Alkydharzlack lackiert wie in Beispiel 1 beschrieben. Die gehärtete Lackfläche wird mit einem Kreuzschritt versehen. Die Proben werden 18 Monate lang einer Freibewitterung ausgesetzt in North Carolina nahe der Meeresküste unter einem Neigungswinkel von 45° Süd. Danach wird die Breite der Rostzone entlang den Schnittlinien gemessen (gemäss ASTM D 1654-79a)

Tabelle 2

| Korrosionsinhibitor | Breite der Rostzone |
|---|---|
| Keiner | 2-5 mm |
| 2 % Verbindung Nr. 2 | 0,5-2 mm |

## Patentansprüche

1. Anstrichstoff, enthaltend als Korrosionsinhibitor mindestens eine Verbindung der Formel I,

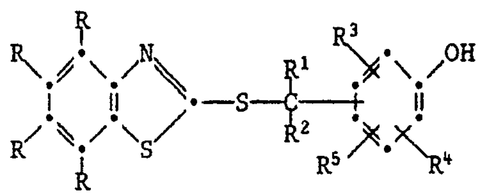

I

worin jedes R unabhängig voneinander Wasserstoff, $C_1$-$C_{12}$-Alkyl, $C_1$-$C_4$-Halogenalkyl, $C_1$-$C_{12}$-Alkoxy, $C_1$-$C_{12}$-Alkylthio, Phenylthio, Benzylthio, $C_1$-$C_{12}$-Alkylsulfonyl, Phenyl, $C_7$-$C_{15}$-Alkylphenyl, $C_7$-$C_{10}$-Phenylalkyl, $C_5$-$C_8$-Cycloalkyl, Halogen, $-NO_2$, -CN, -COOH, -COO($C_1$-$C_4$-Alkyl), -OH, $-NH_2$, $-NHR^6$, $-N(R^6)_2$, $-CONH_2$, $-CONHR^6$ oder $-CON(R^6)_2$ bedeutet,
$R^1$ Wasserstoff, $C_1$-$C_{12}$-Alkyl, Phenyl, durch Halogen, $C_1$-$C_4$-Alkyl, $C_1$-$C_4$-Alkoxy oder $-NO_2$ substituiertes Phenyl, Pyridyl, Thienyl oder Furyl bedeutet,
$R^2$ Wasserstoff oder $C_1$-$C_4$-Alkyl bedeutet,
$R^3$ und $R^4$ unabhängig voneinander Wasserstoff, Halogen, $C_1$-$C_4$-Alkoxy, Cyano, Nitro, $C_1$-$C_{20}$-Alkyl, $-(CH_2)_m-COOR^7$, $-(CH_2)_m-CONHR^6$, $-(CH_2)_m-CON(R^6)_2$, $C_3$-$C_{20}$-Alkenyl, $C_7$-$C_{10}$-Phenylalkyl, Phenyl, Cyclohexyl, Cyclopentyl oder eine Gruppe der Formel II

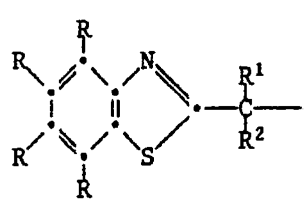

II

bedeutet,
$R^5$ Wasserstoff, $C_1$-$C_{20}$-Alkyl, $C_3$-$C_{20}$-Alkenyl oder Hydroxyl bedeutet, oder $R^3$ und $R^5$ zusammen oder $R^4$ und $R^5$ zusammen einen Ring bilden, der an den Phenolrest anelliert ist und der ein carbocyclischer oder heterocyclischer Ring sein kann und als Heteroatome Sauerstoff, Stickstoff oder Schwefel enthalten kann,
$R^6$ $C_1$-$C_{12}$-Alkyl, durch ein oder mehrere O-Atome unterbrochenes $C_3$-$C_{12}$-Alkyl, $C_5$-$C_8$-Cycloalkyl, Benzyl, Phenyl oder durch Halogen, $C_1$-$C_4$-Alkyl, $C_1$-$C_4$-Alkoxy oder Nitro substituiertes Phenyl bedeutet oder $-N(R^6)_2$ eine Pyrrolidino-, Piperidino- oder Morpholinogruppe bedeutet,
$R^7$ $C_1$-$C_{20}$-Alkyl bedeutet, das durch Halogen oder Hydroxyl substituiert sein kann, oder $C_3$-$C_{20}$-Alkyl bedeutet, das durch ein oder mehrere Sauerstoffatome unterbrochen ist und auch durch Hydroxyl substituiert sein kann, und m 0, 1 oder 2 ist.

2. Anstrichstoff gemäss Anspruch 1, dadurch gekennzeichnet, dass in Formel I ein R Wasserstoff, $C_1$-$C_4$-

Alkyl, $C_1$-$C_4$-Alkoxy, Halogen, Trifluormethyl oder Nitro bedeutet und die anderen drei R Wasserstoff sind.

3. Anstrichstoff gemäss Anspruch 1, dadurch gekennzeichnet, dass in Formel I $R^1$ Wasserstoff, $C_1$-$C_8$-Alkyl, Phenyl oder Furyl bedeutet und $R^2$ Wasserstoff ist.

4. Anstrichstoff gemäss Anspruch 1, dadurch gekennzeichnet, dass in Formel I $R^1$ und $R^2$ Wasserstoff sind.

5. Anstrichstoff gemäss Anspruch 1, dadurch gekennzeichnet, dass in Formel I $R^3$ und $R^4$ unabhängig voneinander Wasserstoff, $C_1$-$C_8$-Alkyl, Allyl, $C_7$-$C_{10}$-Phenylalkyl, $C_1$-$C_4$-Alkoxy, Halogen, Phenyl oder Cyclohexyl bedeuten und $R^5$ Wasserstoff, $C_1$-$C_{18}$-Alkyl oder $C_3$-$C_{18}$-Alkenyl bedeutet.

6. Anstrichstoff gemäss Anspruch 1, enthaltend eine Verbindung der Formel III,

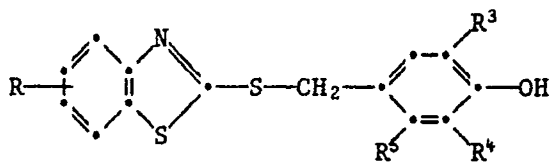

III

worin R Wasserstoff, $C_1$-$C_4$-Alkyl, $C_1$-$C_4$-Alkoxy, Chlor, Trifluormethyl oder Nitro ist, $R^3$ und $R^4$ unabhängig voneinander Wasserstoff, $C_1$-$C_8$-Alkyl, $C_7$-$C_{10}$-Phenylalkyl, Phenyl oder Cyclohexyl sind und $R^5$ Wasserstoff oder Methyl ist.

7. Anstrichstoff gemäss Anspruch 1, enthaltend eine Verbindung der Formel IV oder IVa

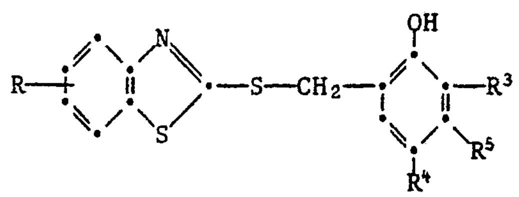

IV

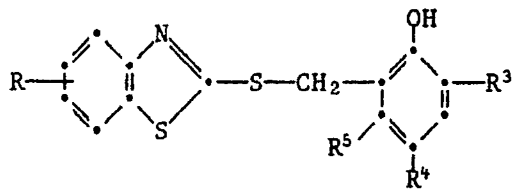

IVa

worin R Wasserstoff, $C_1$-$C_4$-Alkyl, $C_1$-$C_4$-Alkoxy, Chlor, Trifluormethyl oder Nitro ist $R^3$ und $R^4$ unabhängig voneinander Wasserstoff, $C_1$-$C_8$-Alkyl, $C_7$-$C_{10}$-Phenylalkyl, Phenyl, Cyclohexyl oder eine Gruppe der Formel IIa

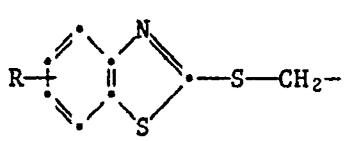

IIa

ist und $R^5$ Wasserstoff, $C_1$-$C_{18}$-Alkyl oder $C_3$-$C_{18}$-Alkenyl bedeutet.

8. Anstrichstoff gemäss Anspruch 1, auf Basis eines Alkyd-, Acryl-, Melamin-, Polyurethan-, Epoxid- oder Polyesterharzes oder eines Gemisches solcher Harze.

9. Anstrichstoff gemäss Anspruch 1 auf Basis eines aromatischen Epoxidharzes.

10. Anstrichstoff gemäss Anspruch 1, welcher ein Primer für metallische Substrate ist.

11. Primer gemäss Anspruch 9 für Substrate aus Eisen, Stahl, Kupfer, Zink oder Aluminium.

12. Anstrichstoff gemäss Anspruch 1 für wässrige Anstrichsysteme.

13. Anstrichstoff gemäss Anspruch 11, der ein kathodisch abscheidbarer Elektrophoreselack ist.

14. Anstrichstoff gemäss Anspruch 12, enthaltend 0,5 bis 5 Gew-%, bezogen auf den Feststoffgehalt des Anstriches, mindestens einer Verbindung der Formel I als Korrosionsinhibitor.

## Claims

1. A coating material containing, as a corrosion inhibitor, at least one compound of the formula I

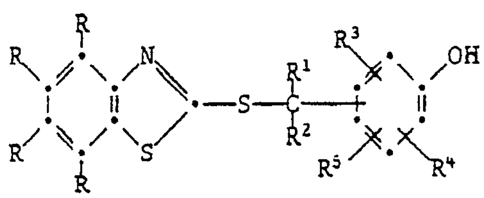

I

in which each R independently is $C_1$-$C_{12}$alkyl, $C_1$-$C_4$halogenoalkyl, $C_1$-$C_{12}$alkoxy, $C_1$-$C_{12}$alkylthio, phenylthio, benzylthio, $C_1$-$C_{12}$alkylsulfonyl, phenyl, $C_7$-$C_{15}$alkylphenyl, $C_7$-$C_{10}$phenylalkyl, $C_5$-$C_8$cycloalkyl, halogen, $-NO_2$, -CN, -COOH, -COO($C_1$-$C_4$alkyl), -OH, $-NH_2$, $-NHR^6$, $-N(R^6)_2$, $-CONH_2$, $-CONHR^6$ or $-CON(R^6)_2$, $R^1$ is hydrogen, $C_1$-$C_{12}$alkyl, phenyl or halogen-, $C_1$-$C_4$alhyl-, $C_1$-$C_4$alkoxy- or $-NO_2$-substituted phenyl, pyridyl, thienyl or furyl, $R^2$ is hydrogen or $C_1$-$C_4$alkyl, $R^3$ and $R^4$ independently of one another are hydrogen, halogen, $C_1$-$C_4$alkoxy, cyano, nitro, $C_1$-$C_{20}$alkyl, $-(CH_2)_m-COOR^7$, $-(CH_2)_m-CONHR^6$, $-(CH_2)_m-CON(R^6)_2$, $C_3$-$C_{20}$alkenyl, $C_7$-$C_{10}$phenylalkyl, phenyl, cyclohexyl, cyclopentyl or a group of the formula II

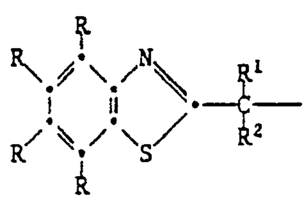

II

$R^5$ is hydrogen, $C_1$-$C_{20}$alkyl, $C_3$-$C_{20}$alkenyl or hydroxyl, or $R^3$ and $R^5$ together or $R^4$ and $R^5$ together form a ring which is fused to the phenol radical and can be a carbocyclic or heterocyclic ring and can contain oxygen, nitrogen or sulfur as hetero atoms, $R^6$ is $C_1$-$C_{12}$alkyl, $C_3$-$C_{12}$alkyl interrupted by one or more O atoms, $C_5$-$C_8$cycloalkyl, benzyl, phenyl or halogen-, $C_1$-$C_4$alkyl-, $C_1$-$C_4$alkoxy- or nitro-substituted phenyl or $-N(R^6)_2$ is a pyrrolidino, piperidino or morpholino group, $R^7$ is $C_{1\text{-}20}$alkyl which can be substituted by halogen or hydroxyl, or is $C_3$-$C_{20}$alkyl which is interrupted by one or more oxygen atoms and can also be substituted by hydroxyl, and m is 0, 1 or 2.

2. A coating material according to claim 1, wherein, in the formula I, one R is hydrogen, $C_1$-$C_4$alkyl, $C_1$-$C_4$alkoxy, halogen, trifluoromethyl or nitro and the other three R's are hydrogen.

3. A coating material according to claim 1, wherein, in the formula I, $R^1$ is hydrogen, $C_1$-$C_8$alkyl, phenyl or furyl and $R^2$ is hydrogen.

4. A coating material according to claim 1, wherein, in the formula I, $R^1$ and $R^2$ are hydrogen.

5. A coating material according to claim 1, wherein, in the formula I, $R^3$ and $R^4$ independently of one another are hydrogen, $C_1$-$C_8$alkyl, allyl, $C_7$-$C_{10}$phenylalkyl, $C_1$-$C_4$alkoxy, halogen, phenyl or cyclohexyl and $R^5$ is hydrogen, $C_1$-$C_{18}$alkyl or $C_3$-$C_{18}$alkenyl.

6. A coating material according to claim 1, containing a compound of the formula III

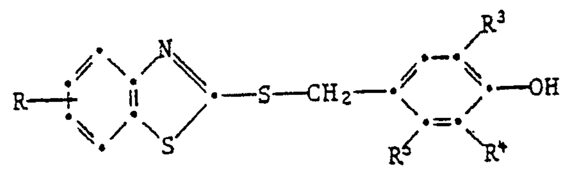

(III)

in which R is hydrogen, $C_1$-$C_4$alkyl, $C_1$-$C_4$alkoxy, chlorine, trifluoromethyl or nitro, $R^3$ and $R^4$ independently of one another are hydrogen, $C_1$-$C_8$alkyl, $C_7$-$C_{10}$phenylalkyl, phenyl or cyclohexyl and $R^5$ is hydrogen or methyl.

7. A coating material according to claim 1, containing a compound of the formula IV or IVa

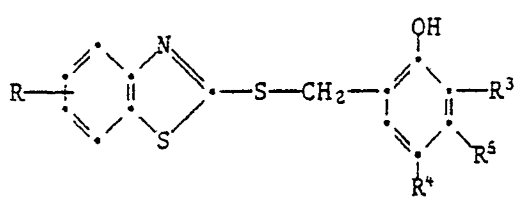

IV

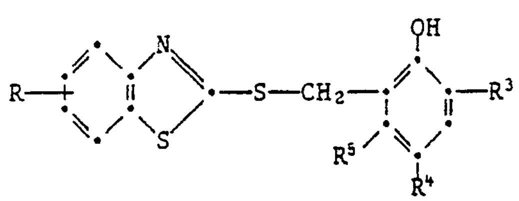

IVa

in which R is hydrogen, $C_1$-$C_4$alkyl, $C_1$-$C_4$alkoxy, chlorine, trifluoromethyl or nitro, $R^3$ and $R^4$ independently of one another are hydrogen, $C_1$-$C_8$alkyl, $C_7$-$C_{10}$phenylalkyl, phenyl, cyclohexyl or a group of the formula IIa

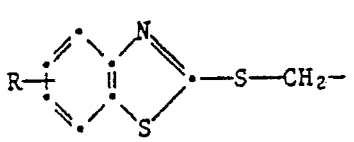

IIa

and $R^5$ is hydrogen, $C_1$-$C_{18}$alkyl or $C_3$-$C_{18}$alkenyl.

8. A coating material according to claim 1, based on an alkyd, acrylic, melamine, polyurethane, epoxide or polyester resin or a mixture of such resins.

**9.** A coating material according to claim 1, based on an aromatic epoxide resin.

**10.** A coating material according to claim 1, as a primer for metallic substrates.

**11.** A primer according to claim 9 for substrates of iron, steel, copper, zinc or aluminium.

**12.** A coating material according to claim 1 for aqueous paint systems.

**13.** A coating material according to claim 11, which is a cathodic electrodeposition coating material.

**14.** A coating material according to claim 12, containing 0.5 to 5% by weight, relative to the solids content of the paint, of at least one compound of the formula I as a corrosion inhibitor.

**Revendications**

**1.** Peinture contenant comme inhibiteur de la corrosion au moins un composé de formule I :

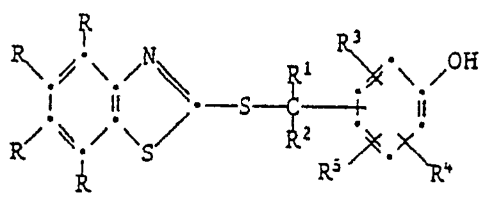

I

dans laquelle chaque R représente, indépendamment l'un de l'autre, un atome d'hydrogène, un groupe alkyle en $C_1$ à $C_{12}$, halogéno-alkyle en $C_1$ à $C_4$, alcoxy en $C_1$ à $C_{12}$, alkylthio en $C_1$ à $C_{12}$, phénylthio, benzylthio, alkylsulfonyle en $C_1$ à $C_{12}$, phényle, alkylphényle en $C_7$ à $C_{15}$, phénylalkyle en $C_7$ à $C_{10}$, cycloalkyle en $C_5$ à $C_8$, halogéno, $-NO_2$, -CN, -COOH, -COO(alkyle en $C_1$ à $C_4$), -OH, $-NH_2$, $-NHR^6$, $-N(R^6)_2$, $-CONH_2$, $-CONHR^6$ ou $-CON(R^6)_2$,

$R^1$ représente un atome d'hydrogène, un groupe alkyle en $C_1$ à $C_{12}$, phényle, phényle (substitué par de l'halogène, par un groupe alkyle en $C_1$ à $C_4$, alcoxy en $C_1$ à $C_4$ ou $-NO_2$), pyridyle, thiényle ou furyle,

$R^2$ représente un atome d'hydrogène ou un groupe alkyle en $C_1$ à $C_4$,

$R^3$ et $R^4$ représentent chacun, indépendamment l'un de l'autre, un atome d'hydrogène ou d'halogène, un groupe alcoxy en $C_1$ à $C_4$, cyano, nitro, alkyle en $C_1$ à $C_{20}$, $-(CH_2)_m$ $--COOR^7$, $-(CH_2)_m-CONHR^6$, $-(CH_2)_m-CON(R^6)_2$, alcényle en $C_3$ à $C_{20}$, phénylalkyle en $C_7$ à $C_{10}$, phényle, cyclohexyle, cyclopentyle ou un groupe de formule II :

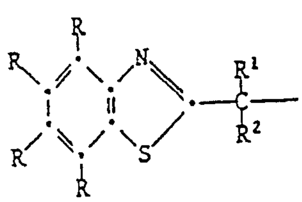

II

$R^5$ représente un atome d'hydrogène, un groupe alkyle en $C_1$ à $C_{20}$, alcényle en $C_3$ à $C_{20}$ ou hydroxyle,

ou bien $R^3$ et $R^5$ ensemble ou bien $R^4$ et $R^5$ ensemble forment un noyau qui est condensé sur le reste phénol et qui peut être un noyau carbocyclique ou hétérocyclique et qui peut contenir comme hétéroatomes de l'oxygène, de l'azote ou du soufre,

$R^6$ représente un groupe alkyle en $C_1$ à $C_{12}$ , un groupe alkyle en $C_3$ à $C_{12}$ (interrompu par un ou plusieurs atomes de O), cycloalkyle en $C_5$ à $C_8$, benzyle, phényle ou phényle (substitué par de l'halogène ou par un groupe alkyle en $C_1$ à $C_4$, alcoxy en $C_1$ à $C_4$ ou nitro) ou bien $-N(R^6)_2$ représente un groupe pyrrolidino, pipéridino ou morpholino, $R^7$ représente un groupe alkyle en $C_1$ à $C_{20}$, qui peut

être substitué par de l'halogène ou par un groupe hydroxyle, ou bien il représente un groupe alkyle en $C_3$ à $C_{20}$ qui est interrompu par un ou plusieurs atomes d'oxygène,et qui peut également être substitué par un groupe hydroxyle, et m vaut 0, 1 ou 2.

2. Peinture selon la revendication 1, caractérisée en ce que, dans la formule I, un symbole R représente un atome d'hydrogène, un groupe alkyle en $C_1$ à $C_4$, alcoxy en $C_1$ à $C_4$, halogéno, trifluorométhyle ou nitro, et les trois autres symboles R représentent chacun un atome d'hydrogène.

3. Peinture selon la revendication 1, caractérisée en ce que, dans la formule I, $R^1$ représente un atome d'hydrogène, un groupe alkyle en $C_1$ à $C_8$, phényle ou furyle, et $R^2$ représente l'hydrogène.

4. Peinture selon la revendication 1, caractérisée en ce que, dans la formule I, $R^1$ et $R^2$ représentent chacun un atome d'hydrogène.

5. Peinture selon la revendication 1, caractérisée en ce que, dans la formule I, les symboles $R^3$ et $R^4$ représentent chacun, indépendamment l'un de l'autre, un atome d'hydrogène, un groupe alkyle en $C_1$ à $C_8$, allyle, phénylalkyle en $C_7$ à $C_{10}$, alcoxy en $C_1$ à $C_4$, halogéno, phényle ou cyclohexyle, et $R^5$ représente un atome d'hydrogène, un groupe alkyle en $C_1$ à $C_{18}$ ou alcényle en $C_3$ à $C_{18}$.

6. Peinture selon la revendication 1, contenant un composé de formule III :

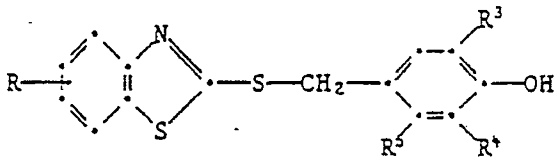

III

dans laquelle R représente un atome d'hydrogène, un groupe alkyle en $c_1$ à $c_4$, alcoxy en $C_1$ à $C_4$, chloro, trifluorométhyle ou nitro ; $R^3$ et $R^4$ représentent chacun, indépendamment l'un de l'autre, un atome d'hydrogène, un groupe alkyle en $C_1$ à $C_6$, phénylalkyle en $C_7$ à $C_{10}$, phényle ou cyclohexyle, et $R^5$ représente un atome d'hydrogène ou un groupe méthyle.

7. Peinture selon la revendication 1, contenant un composé de formule IV ou IVa :

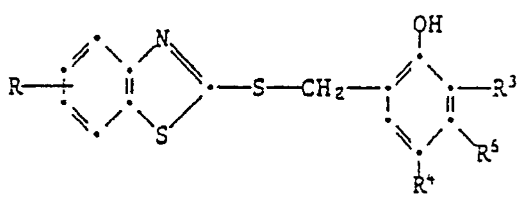

IV

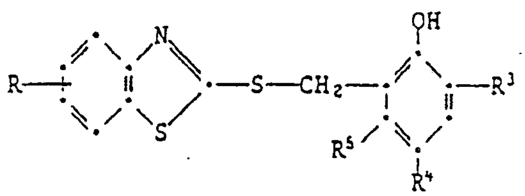

IVa

dans lesquelles R représente un atome d'hydrogène, un groupe alkyle en $C_1$ à $C_4$, alcoxy en $C_1$ à $C_4$ chloro, trifluorométhyle ou nitro ; $R^3$ et $R^4$ représentent chacun, indépendamment l'un de l'autre, un atome d'hydrogène, un groupe alkyle en $C_1$ à $C_8$, phénylalkyle en $C_7$ à $C_{10}$, phényle, cyclohexyle ou un groupe de formule IIa :

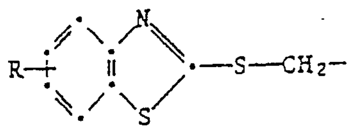

IIa ,

et $R^5$ représente un atome d'hydrogène, un groupe alkyle en $C_1$ à $C_{18}$ ou un groupe alcényle en $C_3$ à $C_{18}$.

**8.** Peinture selon la revendication 1, à base d'une résine alkyde, acrylique, de mélamine, de polyuréthanne, époxyde ou de polyester ou d'un mélange de telles résines.

**9.** Peinture selon la revendication 1, à base d'une résine époxyde aromatique.

**10.** Peinture selon la revendication 1, qui est un primaire d'apprêt pour des subjectiles métalliques.

**11.** Primaire selon la revendication 9 pour des subjectiles en fer, en acier, en cuivre, en zinc ou en aluminium.

**12.** Peinture selon la revendication 1 pour des systèmes de peinture à l'eau.

**13.** Peinture selon la revendication 11, qui est une laque pour électrophorèse pouvant être déposée à la cathode.

**14.** Peinture selon la revendication 12, contenant 0,5 à 5 % en poids, sur la base de la teneur en matière sèche de la peinture, d'au moins un composé de formule I comme inhibiteur de la corrosion.